# DEMANDE DE BREVET EUROPEEN

(11) **EP 4 718 897 A1**
(43) Date de publication de la demande: **01.04.2026**
(21) Numéro de dépôt: 25192633.3
(22) Date de dépôt: 29.07.2025
(51) Int. Cl.: H04W 8/20, H04W 8/24, H04W 4/70, H04W 8/18

(54) **PROCÉDÉ DE CONNEXION D'UN OBJET CONNECTÉ À UN RÉSEAU DE TÉLÉCOMMUNICATIONS ET DISPOSITIF ASSOCIÉ**

(30) Priorité: 30.09.2024 FR 2410460
(71) Demandeur: IDEMIA France, 92400 Courbevoie (FR)
(72) Inventeur: GAUVIN, David, 92400 Courbevoie (FR); DUMOULIN, Jérôme, 92400 Courbevoie (FR)
(74) Mandataire: Idemia

(57) **Abrégé**

L'invention concerne un procédé de connexion à un réseau de télécommunications d'un objet connecté (IoT-D) dans lequel est embarqué un élément sécurisé (eUICC). Le procédé comprend : une réception, par l'élément sécurisé (eUICC), d'un identifiant (APN) de point d'accès réseau préalablement émis par un gestionnaire (eIM) d'éléments sécurisés d'objets connectés ou par un gestionnaire de profils d'opérateurs (SM-DP+) ; une activation, par l'élément sécurisé (eUICC), d'un profil d'opérateur (PR#2) associé audit opérateur, le profil d'opérateur (PR#2) étant enregistré au sein de l'élément sécurisé (eUICC) ; et une connexion, par l'objet connecté (IoT-D), au réseau de télécommunications de l'opérateur en utilisant ledit identifiant (APN) de point d'accès réseau.

## Description

### Domaine Technique

La présente invention appartient au domaine général des télécommunications. Elle concerne plus particulièrement un procédé de connexion d'un objet connecté à un réseau de télécommunications. Elle concerne également un objet connecté configuré pour mettre en œuvre un tel procédé. Elle concerne enfin un système de télécommunication comprenant un objet connecté, ainsi qu'un gestionnaire d'éléments sécurisés d'objets connectés et/ou un gestionnaire de profils d'opérateurs.

L'invention se situe plus particulièrement dans le cadre d'un objet connecté dans lequel est embarqué un élément sécurisé de type eUICC ("embedded Universal Integrated Circuit Card" selon la terminologie anglo-saxonne, ou "carte de circuit intégré universelle embarquée").

### Technique antérieure

De façon connue en soi, les éléments sécurisés de type eUICC sont utilisés pour contrôler l'accès à un réseau de téléphonie mobile, et sont embarqués dans des dispositifs électroniques. Par "embarqué", on entend que l'élément sécurisé n'est pas aisément accessible ou remplaçable, ou qu'il n'a pas été prévu qu'il soit accessible ou remplaçable. Un élément sécurisé embarqué dans un dispositif électronique - et nommé "eUICC" ci-après - peut être ou non solidaire de ce dispositif électronique, et se distingue notamment d'une carte "SIM" classique (e.g., "non embarquée") par le fait qu'il est configurable à distance ("Over-The-Air" selon la terminologie anglo-saxonne).

La GSMA (acronyme de "GSM Association") agit en tant qu'organisme de normalisation et a défini plusieurs règles et lignes directrices qui concernent les éléments sécurisés de type eUICC lorsque ces derniers sont embarqués dans des objets connectés. Ces objets connectés (parfois également nommés "objets intelligents") sont des dispositifs électroniques caractérisés par leur capacité à interagir avec leur environnement immédiat, généralement au travers d'un microcontrôleur permettant de piloter un capteur et/ou un actionneur, ainsi que par leur connectivité. Ces objets sont connectés à un réseau de communication, tel que par exemple le réseau public Internet dans le cadre de l'Internet des Objets ("Internet of Things", IoT, selon la terminologie anglo-saxonne), et peuvent par ce biais communiquer avec d'autres systèmes pour obtenir et/ou fournir de l'information. Ainsi, les objets connectés permettent de capturer et de remonter vers le réseau la valeur courante d'une information spécifique à leur environnement et/ou à leur fonctionnement, et/ou de recevoir du réseau une commande dont l'exécution peut avoir un effet sur cet environnement et/ou ce fonctionnement.

Pour pouvoir être configurée à distance sans l'intervention d'un utilisateur, une eUICC comprend des données nécessaires à l'établissement d'une communication sans fil qui est, par exemple, initiée lors d'une première connexion du dispositif électronique (e.g., de l'objet connecté) ou en cas de dysfonctionnement. Ces données sont parfois nommées "profil de provision" (ou "provisioning profile" selon la terminologie anglo-saxonne). Une eUICC comprend également des données relatives à un abonnement souscrit auprès d'un opérateur de téléphonie mobile, également nommées "profil d'opérateur" (ou "operator profile" selon la terminologie anglo-saxonne). Un profil d'opérateur est spécifique à un opérateur de téléphonie mobile dans la mesure où il autorise uniquement un accès à une infrastructure particulière. À titre d'exemple, le profil d'opérateur peut inclure des informations sur les entités matérielles et/ou logicielles de l'infrastructure à contacter et des données cryptographiques.

Pour pouvoir se connecter à un réseau de communication, tel que l'Internet, un objet connecté doit également disposer d'un identifiant de point d'accès réseau (ou "Access Point Name", APN, selon la terminologie anglo-saxonne). Cet identifiant permet typiquement à un dispositif électronique de se connecter à l'Internet en identifiant une passerelle d'interconnexion située entre le réseau mobile et un réseau IP. Cette passerelle est parfois nommée "Gateway GPRS Support Node", GGSN dans le cadre de la 2G (deuxième génération des technologies de téléphonie mobile) ou de la 3G (troisième génération), et "Packet Data Network Gateway", PGW, dans le cadre de 4G (quatrième génération) ou de la 5G (cinquième génération).

Un identifiant de point d'accès réseau est également spécifique à un opérateur dans la mesure où il autorise uniquement un accès à une infrastructure particulière. Aussi, un changement de profil d'opérateur engendre typiquement un changement d'identifiant de point d'accès réseau. Cependant, les ressources des objets connectés en termes de mémoire sont relativement limitées et ne permettent pas de stocker un nombre important d'identifiants de point d'accès réseau. Par ailleurs, les normes jusqu'à présent définies par la GSMA ne permettent pas de paramétrer un identifiant de point d'accès réseau pour un profil d'opérateur particulier, en particulier lors d'un changement de profil d'opérateur.

Il existe donc un besoin d'améliorer les solutions existantes en termes de connexion d'un objet connecté à un réseau de télécommunications.

### Exposé de l'invention

La présente invention a pour objectif de remédier à tout ou partie des inconvénients de l'art antérieur, notamment ceux exposés ci-avant, en proposant une solution qui permette de paramétrer un identifiant de point d'accès réseau pour un objet connecté dans lequel est embarqué un élément sécurisé.

À cet effet, et selon un premier aspect, l'invention concerne un procédé de connexion à un réseau de télécommunications d'un objet connecté dans lequel est embarqué un élément sécurisé, le procédé comprenant :
- une réception, par l'élément sécurisé, d'un identifiant de point d'accès réseau préalablement émis par un gestionnaire d'éléments sécurisés d'objets connectés ou par un gestionnaire de profils d'opérateurs, l'identifiant de point d'accès réseau étant associé à un opérateur du réseau de télécommunications ;
- une activation, par l'élément sécurisé, d'un profil d'opérateur associé audit opérateur, le profil d'opérateur étant enregistré au sein de l'élément sécurisé ; et
- une connexion, par l'objet connecté, au réseau de télécommunications de l'opérateur en utilisant ledit identifiant de point d'accès réseau.

Le gestionnaire d'éléments sécurisés d'objets connectés correspond par exemple au "eSIM IoT Remote Manager", eIM, tel que défini en section 4.2.1 de la norme "SGP.31 eSIM IoT Architecture and Requirements", Version 1.0, publiée le 19 avril 2022 par la GSMA, et nommée SGP.31 ci-après.

Le gestionnaire de profils d'opérateurs correspond par exemple au "Subscription Manager Data Preparation Plus", SM-DP+, tel que défini dans la norme "SGP.22 RSP Technical Specification", Version 3.0, publiée le 19 octobre 2022 par la GSMA, et nommée SGP.22 ci-après.

De manière générale, on considère que les étapes d'un procédé ne doivent pas être interprétées comme étant liées à une notion de succession temporelle.

Dans des modes particuliers de mise en œuvre, le procédé de connexion peut comporter en outre l'une ou plusieurs des caractéristiques suivantes, prises isolément ou selon toutes les combinaisons techniquement possibles.

Dans des modes particuliers de mise en œuvre, le procédé comprend en outre, préalablement à l'activation,
- une réception, par l'objet connecté et en provenance de l'élément sécurisé, dudit identifiant de point d'accès réseau et d'une commande, dite "première commande", visant à ajouter ledit identifiant à un ensemble d'identifiant(s) de points d'accès réseau utilisables par l'objet connecté ; et
- un ajout, par l'objet connecté, dudit identifiant de point d'accès réseau audit ensemble d'identifiant(s) de points d'accès réseau.

Cette première commande correspond par exemple à la commande "RUN AT COMMAND" telle que définie en section 6.4.23 de la norme ETSI TS 102 223, version V14.1.1, et publiée par l'ETSI en juillet 2018.

Dans des modes particuliers de mise en œuvre, le procédé de connexion comprend en outre une transmission dudit identifiant de point d'accès réseau, par le gestionnaire d'éléments sécurisés d'objets connectés et à destination de l'élément sécurisé, via un assistant de profil d'objet connecté.

Dans des modes particuliers de mise en œuvre, l'assistant de profil d'objet connecté est embarqué au sein de l'élément sécurisé ou de l'objet connecté.

Dans des modes particuliers de mise en œuvre, l'assistant de profil d'objet connecté est conforme à l'assistant de profil d'objet, IPA (acronyme de « IoT Profile Assistant » selon la terminologie anglo-saxonne, ou assistant de profil IoT), tel que défini en section 4 de la norme SGP.31.

Dans des modes particuliers de mise en œuvre, l'assistant de profil d'objet connecté est embarqué au sein de l'objet connecté, et l'identifiant de point d'accès réseau est transmis, par l'assistant de profil d'objet connecté et à destination de l'élément sécurisé, en utilisant une interface de type "ES10b".

Cette interface "ES10b" est par exemple conforme à la norme SGP.31.

Dans des modes particuliers de mise en œuvre, l'identifiant de point d'accès réseau est transmis, par le gestionnaire d'éléments sécurisés d'objets connectés et à destination de l'élément sécurisé, avec une commande, dite "deuxième commande", interprétable par ledit élément sécurisé et visant à transmettre ladite "première commande" à l'objet connecté.

Ainsi, l'identifiant de point d'accès réseau est par exemple transmis comme un paramètre une commande spécifique (nommée "UpdateAPNList" dans la suite de la description).

Dans des modes particuliers de mise en œuvre, l'identifiant de point d'accès réseau est transmis, par le gestionnaire d'éléments sécurisés d'objets connectés et à destination de l'élément sécurisé, avec une commande, dite "troisième commande", d'activation d'un profil d'opérateur de l'élément sécurisé (eUICC), ladite troisième commande comprenant un paramètre représentatif d'une requête de mise-à-jour de l'ensemble d'identifiants de points d'accès réseau de l'objet connecté.

Cette troisième commande correspond par exemple à la commande "EnableProfile" telle que définie dans la norme SGP.22.

Le paramètre correspond par exemple à un indicateur booléen (nommé "UpdateList" dans la suite de la description).

Dans des modes particuliers de mise en œuvre, l'identifiant de point d'accès réseau et, le cas échéant, la deuxième commande ou la troisième commande, sont transmis dans un package de données.

Ce package de données correspond par exemple au package "eIMPackage" tel que défini par la norme "SGP.32 eSIM IoT Technical Specification", Version 1.0.1, publiée par la GSMA le 4 juillet 2023, et nommée SGP.32 ci-après.

Dans des modes particuliers de mise en œuvre, l'identifiant de point d'accès réseau est transmis par le gestionnaire de profils d'opérateurs dans le cadre d'un chargement d'un profil d'opérateur sur l'élément sécurisé de l'objet connecté, et la réception comprend en outre une réception dudit profil d'opérateur.

Dans des modes particuliers de mise en œuvre, le procédé comprend en outre un traitement, par l'élément sécurisé, dudit identifiant de point d'accès réseau en tant que métadonnée associée audit profil d'opérateur.

Selon un deuxième aspect, l'invention concerne des programmes d'ordinateur comportant des instructions pour la mise en œuvre d'un procédé de connexion, lorsque lesdits programmes sont exécutés par un ordinateur.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un troisième aspect, l'invention concerne un support d'enregistrement lisible par un ordinateur sur lequel sont enregistrés les programmes d'ordinateur selon l'invention.

Le support d'informations ou d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, le support d'informations ou d'enregistrement peut être un circuit intégré dans lequel les programmes sont incorporés, le circuit étant adapté pour exécuter ou pour être utilisé dans l'exécution du procédé en question.

Selon un quatrième aspect, l'invention concerne un objet connecté dans lequel est embarqué un élément sécurisé et comprenant :
- un module de réception, au sein de l'élément sécurisé, d'un identifiant de point d'accès réseau préalablement émis par un gestionnaire d'éléments sécurisés d'objets connectés ou par un gestionnaire de profils d'opérateurs, l'identifiant de point d'accès réseau étant associé à un opérateur du réseau de télécommunications ;
- un module d'activation, au sein de l'élément sécurisé, d'un profil d'opérateur associé audit opérateur, le profil d'opérateur étant enregistré au sein de l'élément sécurisé ; et
- un module de connexion au réseau de télécommunications de l'opérateur en utilisant ledit identifiant de point d'accès réseau.

Selon un cinquième aspect, l'invention concerne un système de télécommunication comprenant un gestionnaire d'éléments sécurisés d'objets connectés et un objet connecté selon l'invention.

Selon un sixième aspect, l'invention concerne un système de télécommunication comprenant un gestionnaire de profils d'opérateurs et un objet connecté selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
La figure 1 est une représentation schématique d'un système de télécommunication, selon un premier exemple de mise en œuvre ;
La figure 2 est une représentation schématique d'un système de télécommunication, selon un deuxième exemple de mise en œuvre ;
La figure 3 représente des modules embarqués dans un objet connecté, tel que l'objet connecté appartenant au système de télécommunication de la figure 1 ou 2, selon un exemple de mise en œuvre de l'invention ;
La figure 4 représente schématiquement un exemple d'architecture matérielle d'un objet connecté, tel que l'objet connecté appartenant au système de télécommunication de la figure 1 ou 2 ;
La figure 5 représente, sous forme d'ordinogramme, un premier mode particulier de mise en œuvre d'un procédé de connexion ;
La figure 6 représente, sous forme d'ordinogramme, un deuxième mode particulier de mise en œuvre d'un procédé de connexion ; et,
La figure 7 représente, sous forme d'ordinogramme, un troisième mode particulier de mise en œuvre d'un procédé de connexion.

### Description des modes de réalisation

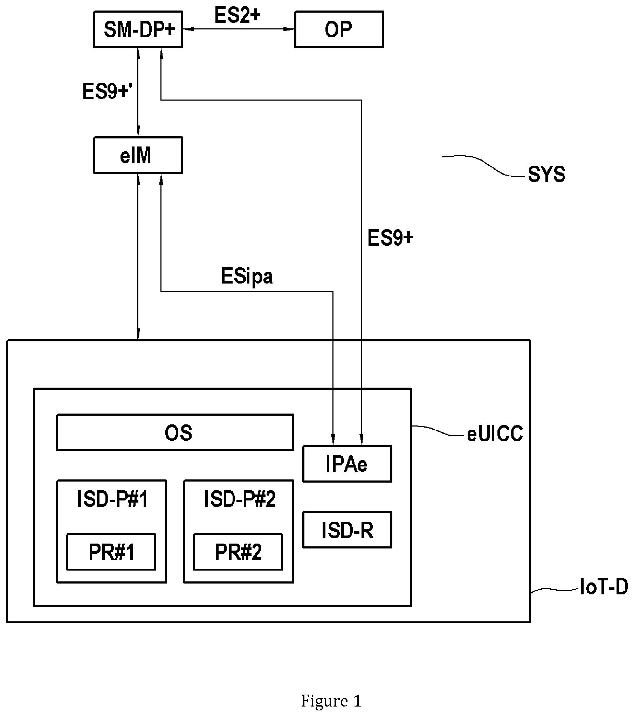

La figure 1 est une représentation schématique d'un système de télécommunication, selon un premier exemple de mise en œuvre.

Tel qu'illustré par la figure 1, le système de télécommunication SYS comprend un opérateur de télécommunication OP connecté à un gestionnaire SM-DP+ de profils d'opérateurs. De cette manière, l'opérateur OP peut par exemple transmettre, au gestionnaire SM-DP+, une requête visant à fournir un profil d'opérateur spécifique à un élément sécurisé donné. L'opérateur OP et le gestionnaire SM-DP+ de profils d'opérateurs sont par exemple connectés au travers d'une interface ES2+, telle que définie par la norme SGP.21, SGP.22 ou SGP.31.

Le gestionnaire SM-DP+ de profils d'opérateurs prend classiquement la forme d'un serveur, et est responsable de la préparation et du stockage de profils d'opérateur. Il assure également un rôle de sécurisation de profils d'opérateurs et un rôle d'attribution respective d'un profil d'opérateur à l'eUICC à laquelle il est destiné. Enfin, le SM-DP+ assure également un rôle dans le téléchargement, à distance, de profils et de données associées à ces profils destinés aux eUICC dont il est responsable. Le gestionnaire de profils d'opérateurs correspond par exemple au "Subscription Manager Data Preparation Plus", SM-DP+, tel que défini dans la norme SGP.22 ou SGP.31.

Le système de télécommunication comprend en outre un gestionnaire eIM d'éléments sécurisés d'objets connectés. Ce gestionnaire eIM est configuré pour gérer, à distance, les téléchargements de profils et de données associées à ces profils ou à mettre en œuvre des fonctions d'administration de profils, telles que celles par exemple définies dans la norme SGP.31. Un gestionnaire eIM peut être configuré pour gérer un unique objet connecté ou une flotte d'objets connectés, et peut être exécuté sur un serveur ou un terminal utilisateur, tel qu'un ordinateur portable ou un téléphone intelligent ("smartphone" selon la terminologie anglo-saxonne).

Puisque les objets connectés ont typiquement des capacités limitées, que ce soit en termes de puissance, de mémoire et/ou de traitement, un gestionnaire eIM peut également servir d'intermédiaire entre un objet connecté et un gestionnaire SM-DP+, d'une part en communiquant avec cet objet connecté en utilisant un protocole de communication léger, d'autre part en communiquant avec le gestionnaire SM-DP+ en utilisant un protocole de communication client/serveur, tel que le protocole HTTP (acronyme de "HyperText Transfer Protocol") ou HTTPs (acronyme de « HTTP secure »), entre le gestionnaire SM-DP+ et ce gestionnaire eIM. L'utilisation de ce gestionnaire eIM permet avantageusement de charger et de gérer les profils d'une eUICC, tout en assurant une sécurité de bout-en-bout entre l'eUICC et le gestionnaire SM-DP+. Comme évoqué précédemment, le gestionnaire eIM correspond par exemple au "eSIM IoT Remote Manager", eIM, tel que défini par la norme SGP.31. Par ailleurs, le gestionnaire eIM d'éléments sécurisés d'objets connectés et le gestionnaire SM-DP+ de profils d'opérateurs sont par exemple connectés au travers d'une interface ES9+', telle que définie par la norme SGP.21 ou SGP.22.

Le système de télécommunication comprend en outre un objet connecté IoT-D. Cet objet IoT-D est connecté à un réseau de communication (non représenté), tel que par exemple le réseau public Internet dans le cadre de l'IoT ou, par exemple un réseau de radio-télécommunication de type, par exemple, GSM (acronyme de « Global System for Mobile communications » selon la terminologie anglo-saxonne, ou système global pour communications mobiles), LTE (acronyme de « Long-Term Evolution » selon la terminologie anglo-saxonne, ou évolution à long terme), 5G, et peut par ce biais communiquer avec d'autres systèmes ou dispositifs électroniques pour obtenir et/ou fournir de l'information. Ainsi, cet objet connecté peut par exemple capturer et remonter vers le réseau la valeur courante d'une information spécifique à son environnement et/ou à son fonctionnement, et/ou recevoir du réseau une commande dont l'exécution peut avoir un effet sur cet environnement et/ou ce fonctionnement.

Cet objet connecté IoT-D est par exemple utilisé dans l'un des domaines suivants :
- l'industrie, parfois alors nommée " industrie 4.0". Dans ce cas, l'objet connecté IoT-D est par exemple configuré pour permettre une surveillance plus fine de différentes étapes de production, ou est intégré à un système de maintenance prédictive ;
- la ville intelligente, par exemple afin de surveiller et de gérer un système de circulation et de transport;
- la sécurité, et l'objet connecté IoT-D correspond par exemple à une caméra ou à un capteur de présence connectés ;
- la santé, et l'objet connecté correspond par exemple à un dispositif médical connecté ou à un dispositif de détection de chute permettant de lutter contre la perte d'autonomie ; et
- l'énergie, et l'objet connecté IoT-D correspond par exemple à un compteur électrique communicant avec un gestionnaire de réseau électrique.

Tel qu'illustré par la figure 1, cet objet connecté IoT-D comprend un élément sécurisé de type eUICC incluant un système d'exploitation OS. Cette eUICC comprend également un assistant de profil d'objet connecté IPAe (acronyme de « IoT Profile Assistant eUICC» selon la terminologie anglo-saxonne, ou assistant de profil IoT eUICC), qui offre des fonctionnalités permettant à l'eUICC de l'objet connecté IoT-D d'être approvisionné par le gestionnaire SM-DP+ ou via le gestionnaire eIM. Cet assistant IPAe de profil d'objet connecté est notamment configuré pour permettre le téléchargement de profils d'opérateurs au sein de l'eUICC, le transfert de commandes de gestion d'un profil d'opérateur - tel que l'activation, la désactivation ou la suppression d'un profil -, mais également pour permettre l'échange de données (e.g., de notifications) avec le gestionnaire (eIM) d'éléments sécurisés d'objets connectés et/ou avec le gestionnaire (SM-DP+) de profils d'opérateurs.

Comme évoqué précédemment, l'assistant de profil d'objet connecté est par exemple conforme à l'assistant de profil d'objet, IPA, tel que défini en section 4 de la norme SGP.31. En outre, le gestionnaire eIM d'éléments sécurisés d'objets connectés et l'assistant de profil d'objet connecté sont par exemple connectés au travers d'une interface ESipa, telle que définie par la norme SGP.31 ou SGP.32. Par ailleurs, le gestionnaire SM-DP+ de profils d'opérateurs et l'assistant de profil d'objet connecté sont par exemple connectés au travers d'une interface ES9+, telle que définie par la norme SGP.21 ou SGP.22.

L'eUICC comprend également un module ISD-R (acronyme de "Issuer Security Domain - Root") généralement considéré comme le représentant, sur l'eUICC, d'un serveur SM-SR (acronyme de "Subscription Manager Secure Routing"). Ce module ISD-R est par exemple conformes à la norme "GlobalPlatform Technology Card Specification", Version 2.3.1, publiée en mars 2018.

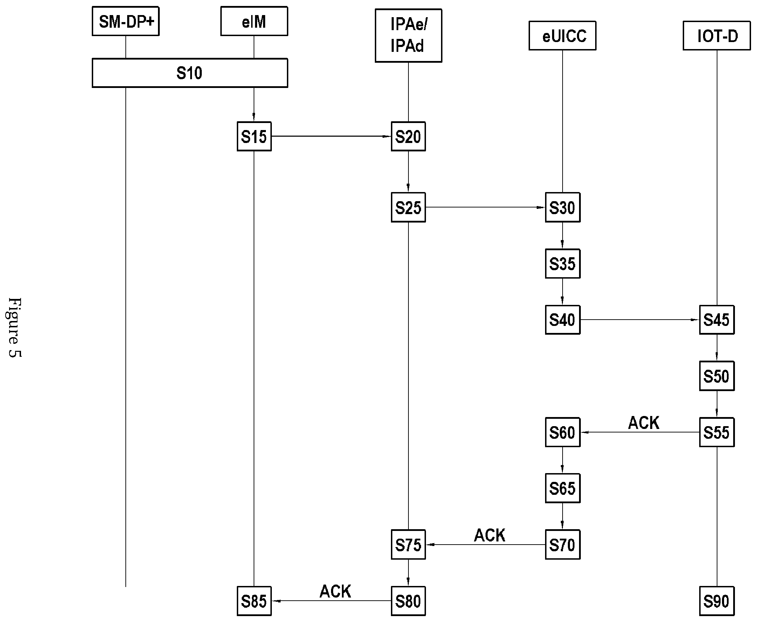

L'eUICC comprend en outre un premier container ISD-P#1 (acronyme de "Issuer Security Domain - Profile) de profil d'opérateur dans lequel est stocké un premier profil d'opérateur PR#1, et un deuxième container ISD-P#2 de profil d'opérateur dans lequel est stocké un deuxième profil d'opérateur PR#2. Les containers ISD-P#1 et ISD-P#2 de profil d'opérateur sont par exemple conformes à la norme "GlobalPlatform Technology Card Specification", Version 2.3.1, publiée en mars 2018. Comme évoqué plus en détail ci-après en référence à la figure 5, seul l'un des deux profils d'opérateurs est actif, par exemple le profil d'opérateur PR#1.

Il convient de noter que le fait de considérer deux profils d'opérateurs ne constitue qu'une variante d'implémentation de l'invention. D'une manière générale, aucune limitation n'est attachée au nombre de profils d'opérateurs pouvant être envisagé, par exemple plus ou moins de deux profils d'opérateurs.

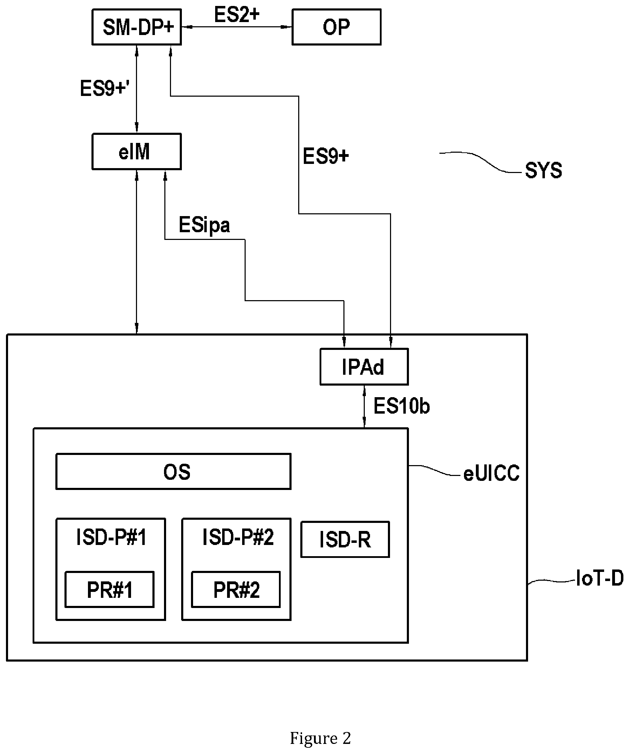

La figure 2 est une représentation schématique d'un système de télécommunication, selon un deuxième exemple de mise en œuvre.

Le système de télécommunication SYS se base sur la configuration déjà décrite ci-avant en référence à la figure 1. En conséquence, les éléments mentionnés en relation avec la figure 1 sont ici repris avec des références numériques identiques.

Ce système de télécommunication diffère uniquement de celui de la figure 1 par le fait qu'un assistant de profil d'objet connecté IPAd (acronyme de « IoT Profile Assistant device» selon la terminologie anglo-saxonne, ou assistant de profil IoT dispositif) n'est cette fois plus embarqué dans l'eUICC, mais dans l'objet connecté IoT-D. Dans ce cas, l'assistant IPAd de profil d'objet connecté est par exemple connecté à l'eUICC au travers d'une interface ES10b, telle que celle par exemple définie par les normes SGP.22, SGP.31, et/ou SGP.32. Les assistants IPAe et IPAd ont donc des fonctionnalités similaires, seule leur localisation respective diffère : l'IPAe est situé dans l'eUICC, tandis que l'IPAd est situé hors de l'eUICC mais dans le dispositif hébergeant l'eUICC, soit, pour la présente invention, l'objet connecté IoT-D.

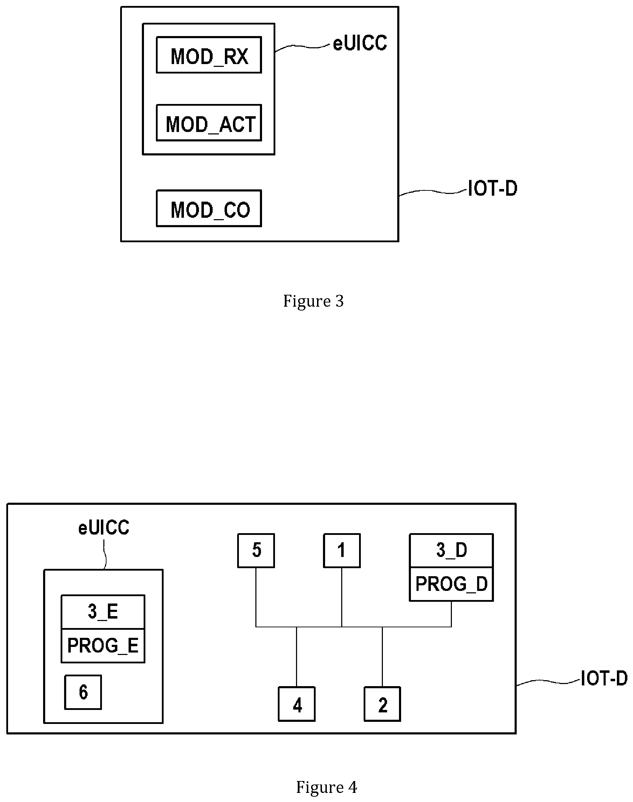

La figure 3 représente des modules embarqués dans un objet connecté, tel que l'objet connecté IoT-D appartenant au système de télécommunication de la figure 1 ou 2, selon un exemple de mise en œuvre de l'invention.

Tel qu'illustré par la figure 3, l'objet connecté IoT-D comprend notamment un élément sécurisé eUICC incluant :
- un module MOD_RX de réception d'un identifiant de point d'accès réseau préalablement émis par un gestionnaire eIM d'éléments sécurisés d'objets connectés ou par un gestionnaire de profils d'opérateurs SM-DP+, l'identifiant APN de point d'accès réseau étant associé à un opérateur du réseau de télécommunications ;
- un module MOD_ACT d'activation d'un profil d'opérateur PR#2 associé audit opérateur, le profil d'opérateur PR#2 étant enregistré au sein de l'élément sécurisé eUICC.

Cet objet connecté IoT-D comprend également un module MOD_CO de connexion au réseau de télécommunications de l'opérateur en utilisant l'identifiant APN de point d'accès réseau.

La figure 4 représente schématiquement un exemple d'architecture matérielle d'un objet connecté, tel que l'objet connecté IoT-D appartenant au système de télécommunication de la figure 1 ou 2.

Tel qu'illustré par la figure 4, l'objet connecté IoT-D dispose de l'architecture matérielle d'un ordinateur. Ainsi, l'objet connecté IoT-D comporte, notamment un processeur 1, une mémoire vive 2, une mémoire morte 3_D et une mémoire non volatile 4. Il dispose en outre de moyens de communication 5. Les éléments matériels 1, 2, 3_D, 4 et 5 sont reliés entre eux, par exemple, par un bus de communication permettant l'interconnexion et la communication entre ces différents éléments matériels.

La mémoire morte 3_D de l'objet connecté IoT-D constitue un support d'enregistrement conforme à l'invention, lisible par le processeur 1 et sur lequel est enregistré un programme d'ordinateur PROG_D conforme à l'invention, comportant des instructions pour l'exécution d'étapes du procédé de connexion. Le programme PROG_D définit des modules fonctionnels de l'objet connecté IoT-D, qui s'appuient ou commandent les éléments matériels 1 à 5 de l'objet connecté IoT-D cités précédemment. Ces modules fonctionnels sont illustrés sur la figure 3 à titre nullement limitatif, et sont décrits plus en détails ci-après en référence à différents modes de mise en œuvre.

Dans des modes particuliers de mis en œuvre, les moyens de communication 5 permettent notamment à l'objet connecté IoT-D d'échanger des données avec tout équipement du système de communication SYS, dont notamment le gestionnaire (eIM) d'éléments sécurisés d'objets connectés et/ou le gestionnaire (SM-DP+) de profils d'opérateurs. À cet effet, les moyens de communication 5 comportent une interface de communication, filaire ou non filaire, apte à mettre en œuvre tout protocole adapté connu de l'homme du métier.

Tel qu'illustré par la figure 4, l'objet connecté IoT-D comprend en outre un élément sécurisé de type eUICC incluant également une mémoire morte 3_E et une mémoire non volatile 6. En raison d'une volonté de concision, tous les éléments matériels d'une eUICC, par ailleurs bien connus de l'homme du métier, n'ont pas été détaillés dans le présent texte. La mémoire morte 3_E de l'eUICC constitue un support d'enregistrement conforme à l'invention, et sur lequel est enregistré un programme d'ordinateur PROG_E conforme à l'invention, comportant des instructions pour l'exécution d'étapes du procédé de connexion. Le programme PROG_E définit des modules fonctionnels de l'eUICC. Ces modules fonctionnels sont illustrés sur la figure 3 à titre nullement limitatif, et sont décrits plus en détails ci-après en référence à différents modes de mise en œuvre.

La figure 5 représente, sous forme d'ordinogramme, un premier mode particulier de mise en œuvre d'un procédé de connexion selon l'invention.

Tel qu'illustré par la figure 5, le procédé de connexion comporte une première étape S10 de génération d'un package de données. Cette étape est mise en œuvre par le gestionnaire SM-DP+ de profils d'opérateurs et/ou par le gestionnaire eIM d'éléments sécurisés d'objets connectés. Ce package correspond par exemple au package "eIMPackage" tel que défini par la norme SGP.32.

Dans le présent mode de mise en œuvre, le package eIMPackage inclut une commande "UpdateAPNLIst", dite "deuxième commande", prenant comme paramètres un identifiant de point d'accès APN#2 ainsi qu'un identifiant de réseau ID_NET#2. Cette deuxième commande vise à ajouter ledit identifiant APN#2 à un ensemble d'identifiant(s) de points d'accès réseau utilisable(s) par l'objet connecté IoT-D.

Comme précédemment évoqué en référence à la figure 1, l'élément sécurisé eUICC comprend deux profils d'opérateurs PR#1 et PR#2 enregistrés au sein d'une mémoire de cette eUICC. Le premier profil PR#1 correspond dans cet exemple au profil actif et est associé à un réseau ID_NET#1, et le deuxième profil PR#2 est un profil d'opérateur désactivé et associé au réseau ID_NET#2.

Le package comprend en outre une commande de gestion de profil, dite "troisième commande" et correspondant dans cet exemple à une commande d'activation du deuxième profil d'opérateur PR#2. Cette troisième commande correspond par exemple à la commande "EnableProfile" telle que définie par la norme SGP.22.

Le procédé de connexion comprend en outre une étape S15 au cours de laquelle le package eIMPackage est transmis, par le gestionnaire eIM d'éléments sécurisés d'objets connectés, à destination d'un assistant IPAd, IPAe de profil d'objet connecté, et reçu par cet assistant lors d'une étape S20. Lorsque cet assistant de profil d'objet connecté est embarqué au sein de l'élément sécurisé eUICC, il est alors référencé IPAe, et lorsque cet assistant de profil d'objet connecté est embarqué au sein de l'objet connecté IoT-D, il est alors référencé IPAd. Par souci de concision, les assistants IPAe et IPAe de profil d'objet connecté ont été regroupés sur la figure 5. Ainsi, l'assistant IPAe est situé dans l'eUICC et l'assistant IPAd est situé, hors eUICC, dans l'objet connecté IoT-D.

Puis, lors d'une étape S25, ce package eIMPackage est transmis à destination de l'eUICC et reçu par cette eUICC lors d'une étape S30. Dans le cas particulier où l'assistant IPAd de profil d'objet connecté est embarqué au sein de l'objet connecté IoT-D, le package est par exemple transmis au travers de l'interface "ES10b" telle que définie par la norme SGP.31, et reçu par le module ISD-R. Cette étape S30 de réception est par exemple mise en œuvre par le module MOD_RX de l'eUICC.

Le procédé de connexion comprend en outre une étape S35 au cours de laquelle le package est analysé par l'eUICC, par exemple par l'ISD-R, ou, dans une variante, par le système d'exploitation OS de l'eUICC. Cette étape d'analyse S35 inclut une détection, par l'eUICC et dans le package eIMPackage reçu, d'une commande dite "deuxième commande" "UpdateAPNList" de mise à jour de l'ensemble d'identifiant(s) de points d'accès réseau utilisables avec le couple (APN#2, ID_NET#2). À la suite de cette détection, l'eUICC génère une commande, dite "première commande" représentative de la détection de la deuxième commande "UpdateAPNList". Puis, lors d'une étape S40, l'eUICC transmet, à destination de l'objet connecté IoT-D, ladite "première commande", visant à ajouter ledit identifiant à un ensemble d'identifiant(s) de points d'accès réseau utilisables par l'objet connecté. Cette première commande correspond par exemple à la commande "RUN AT COMMAND" telle que définie en section 6.4.23 de la norme ETSI TS 102 223, version V14.1.1, et publiée par l'ETSI en juillet 2018. La commande "RUN AT COMMAND" ainsi générée est formatée de sorte à pouvoir transmettre le couple (APN#2, ID_NET#2) depuis l'eUICC vers l'objet connecté, et à permettre la mise à jour de l'ensemble d'identifiant(s) de points d'accès réseau de l'objet connecté IoT-D.

Cette première commande est reçue par l'objet connecté IoT-D lors d'une étape S45. Puis, lors d'une étape S50, en réponse à la réception de cette première commande, l'objet connecté met à jour l'ensemble d'identifiant(s) de points d'accès réseau utilisables - et par exemple stocké en mémoire non volatile 4 -. Plus précisément, lors de cette étape S50, l'objet connecté IoT-D ajoute le couple (APN#2, ID_NET#2) à cet ensemble. Puis, lors d'une étape S55, l'objet connecté IoT-D transmet, à destination de l'eUICC, une confirmation de mise-à-jour de l'ensemble d'identifiant(s) qui est reçue par cette eUICC lors d'une étape S60. À la suite de la réception de cette confirmation de cette mise-à-jour, l'eUICC active alors le deuxième profil PR#2 lors d'une étape S65. Cette étape S65 d'activation d'un profil est par exemple mise en œuvre par le module MOD_ACT de l'eUICC.

Le procédé de connexion comprend en outre une étape S70 de transmission, à destination de l'assistant IPAd/IPAe, d'une confirmation ACK d'activation du deuxième profil PR#2. Cette confirmation est par exemple transmise au travers d'un package "eUICCPackageResult" qui est reçu par l'assistant lors d'une étape S75, avant d'être retransmis au gestionnaire eIM d'éléments sécurisés d'objets connectés lors d'une étape S80. Ce package "eUICCPackageResult" est ensuite reçu par le gestionnaire eIM lors d'une étape S85.

Enfin, le procédé de connexion comprend une étape S90 au cours de laquelle l'objet connecté IoT-D se connecte au réseau ID_NET#2, en utilisant l'identifiant de point d'accès réseau APN#2. Cette étape S90 de connexion est par exemple mise en œuvre par le module MOD_CO de l'objet connecté IoT-D.

L'invention a jusqu'à présent été décrite dans le cas où la mise à jour de l'ensemble d'identifiant(s) de points d'accès réseau utilisables se déroule sans erreurs. En cas d'échec de mise à jour de l'ensemble d'identifiant(s) de points d'accès réseau utilisables, lors de l'étape S50, l'objet connecté IoT-D transmet, à destination de l'eUICC, une confirmation de non mise-à-jour de l'ensemble d'identifiant(s) qui est reçue par cette eUICC lors de l'étape S60. À la suite de la réception de cette confirmation de non mise-à-jour, l'eUICC n'active alors pas le deuxième profil PR#2 lors d'une étape S65. Dans ce cas particulier, une confirmation de non-activation du profil PR#2 est transmise, lors de l'étape S70, à destination de l'assistant IPAd/IPAe, puis au gestionnaire eIM d'éléments sécurisés d'objets lors de l'étape S80. Dans ce cas particulier, l'objet IoT-D, à l'étape S90, conserve l'état de connexion antérieur dans lequel il était au moment de la survenue de la mise à jour de l'ensemble d'identifiant(s) de points d'accès réseau, par exemple "connecté" à un réseau relatif à un profil PR#1 de l'eUICC à l'état actif ou non connecté,

L'invention a été décrite jusqu'à présent dans le cas où le package "eIMPackage" inclut la commande "EnableProfile" et la commande "UpdateAPNList", cette commande "UpdateAPNList" prenant comme paramètres l'identifiant de point d'accès APN#2 ainsi que l'identifiant de réseau ID_NET#2.

En variante, le package "eIMPackage" inclut la commande "EnableProfile", et cette commande "EnableProfile" prend comme paramètre un indicateur booléen, e.g., "UpdateList", dont la valeur est représentative d'une requête de mise-à-jour de l'ensemble d'identifiants de points d'accès réseau de l'objet connecté IoT-D. Dans ce cas, l'identifiant de point d'accès APN#2 et l'identifiant de réseau ID_NET#2 correspondent également à des paramètres de la commande "EnableProfile".

L'invention a également été décrite jusqu'à présent dans le cas où le package "eIMPackage" inclut à la fois la commande "EnableProfile" et la commande "UpdateAPNList". Mais l'invention n'en reste pas moins applicable dans le cas où ces commandes sont transmises, par le gestionnaire eIM, au travers de deux packages "eIMPackage" distincts. Dans ce cas, le package incluant la commande "UpdateAPNList" est préférentiellement transmis par le gestionnaire eIM avant le package incluant la commande "EnableProfile". De manière préférentielle, le package "EnableProfile" est transmis par le gestionnaire eIM après qu'il a reçu une confirmation, par l'objet connecté IoT-D, de la mise-à-jour de l'ensemble d'identifiants de points d'accès réseau.

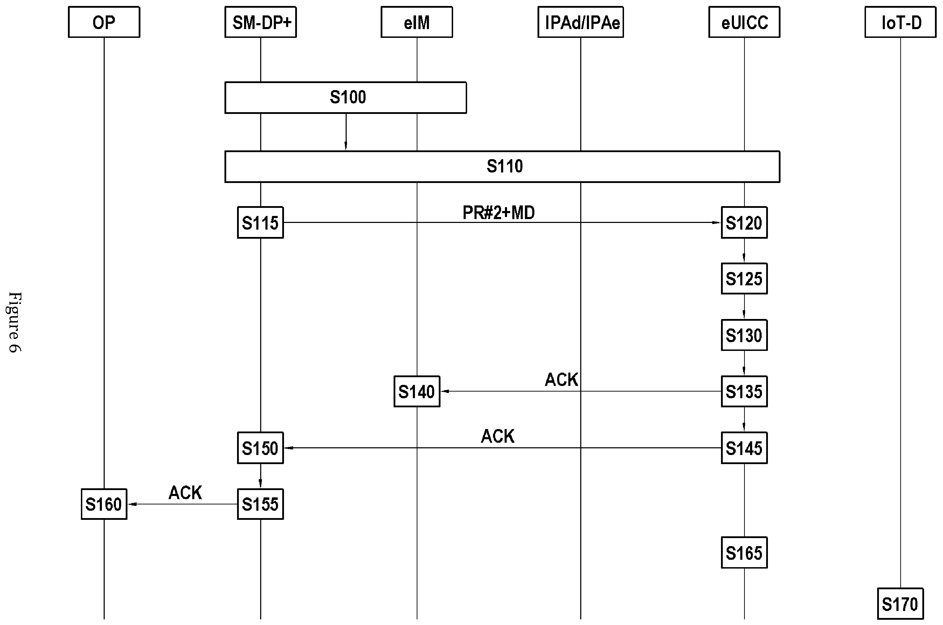

La figure 6 représente, sous forme d'ordinogramme, un deuxième mode particulier de mise en œuvre d'un procédé de connexion.

Tel qu'illustré par la figure 6, le procédé de connexion comprend une première étape S100, mise en œuvre par le gestionnaire SM-DP+ de profils d'opérateurs et/ou par le gestionnaire eIM d'éléments sécurisés d'objets connectés, au cours de laquelle une connexion sécurisée est établie entre ces deux gestionnaires. En variante, la première étape S100 est mise en œuvre par le gestionnaire SM-DP+ et l'eUICC via l'assistant IPAd/IPAe, sans implication du gestionnaire eIM d'éléments sécurisés d'objets.

Le procédé de connexion comprend en outre une étape S110 au cours de laquelle une procédure d'authentification mutuelle est mise en œuvre entre le gestionnaire SM-DP+ de profil d'opérateur, le gestionnaire eIM d'éléments sécurisés d'objets connectés, l'assistant IPAd/IPAe de profil d'objet connecté, et l'élément sécurisé eUICC. Dans une variante, le gestionnaire eIM d'éléments sécurisés d'objets connectés n'est pas impliqué dans la procédure d'authentification mutuelle de l'étape S110, et seuls le gestionnaire SM-DP+ de profil d'opérateur, l'assistant IPAd/IPAe de profil d'objet connecté, et l'élément sécurisé eUICC le sont. Puis, lors d'une étape S115, le gestionnaire SM-DP+ transmet, à destination de l'élément sécurisé eUICC, un profil d'opérateur PR#2 et des métadonnées MD associées à ce profil PR#2. Ce profil PR#2 est un profil d'opérateur associé au réseau ID_NET#2. En outre, ces métadonnées incluent l'identifiant de réseau ID_NET#2 et un identifiant de point d'accès réseau APN#2 permettant de se connecter au réseau ID_NET#2. Ces données - e.g., le profil PR#2 et les métadonnées MD associées - sont reçues par l'élément sécurisé eUICC lors d'une étape S120 qui est par exemple mise en œuvre par le module MOD_RX de cette eUICC.

En réponse à la réception de ces données, l'eUICC enregistre ces données dans la mémoire non volatile 6 lors d'une étape S125, et installe le profil d'opérateur PR#2 lors d'une étape S130.

Le procédé de connexion comprend en outre une étape S135 au cours de laquelle l'eUICC transmet, à destination du gestionnaire eIM d'éléments sécurisés d'objets connectés, une donnée ACK représentative d'un résultat de l'installation du profil d'opérateur PR#2. Cette donnée ACK est reçue par le gestionnaire eIM d'éléments sécurisés d'objets connectés lors d'une étape S140. Ainsi, la donnée ACK indique si l'installation s'est déroulée comme attendu et/ou si des erreurs ont été générées lors de cette installation. L'élément sécurisé eUICC transmet également, lors d'une étape S145, cette donnée ACK à destination du gestionnaire SM-DP+. Cette donnée ACK est reçue par le gestionnaire lors d'une étape S150, qui la retransmet ensuite à l'opérateur OP lors d'une étape S155. La donnée ACK est ensuite reçue par l'opérateur lors d'une étape S160.

Le procédé de connexion comprend également une étape S165 au cours de laquelle l'élément sécurisé eUICC active le profil d'opérateur PR#2 qu'il vient de recevoir. Cette étape S165 d'activation d'un profil est par exemple mise en œuvre par le module MOD_ACT de l'eUICC, et est initiée suite à la réception, par l'eUICC d'une commande d'activation d'un profil d'opérateur, telle que la commande "EnableProfile" précédemment évoquée. Cette procédure de réception d'une commande d'activation est similaire à celle précédemment décrite en référence à la figure 5, et n'est donc pas représentée sur cette figure 6.

Selon une implémentation particulière, le procédé de connexion comprend en outre une transmission, à destination du gestionnaire eIM d'éléments sécurisés d'objets connectés, d'une confirmation ACK d'activation de ce deuxième profil PR#2 (non représentée).

Enfin, le procédé de connexion comprend une étape S170 au cours de laquelle l'objet connecté IoT-D se connecte au réseau ID_NET#2, en utilisant l'identifiant de point d'accès réseau APN#2. Cette étape S170 de connexion est par exemple mise en œuvre par le module MOD_CO de l'objet connecté IoT-D.

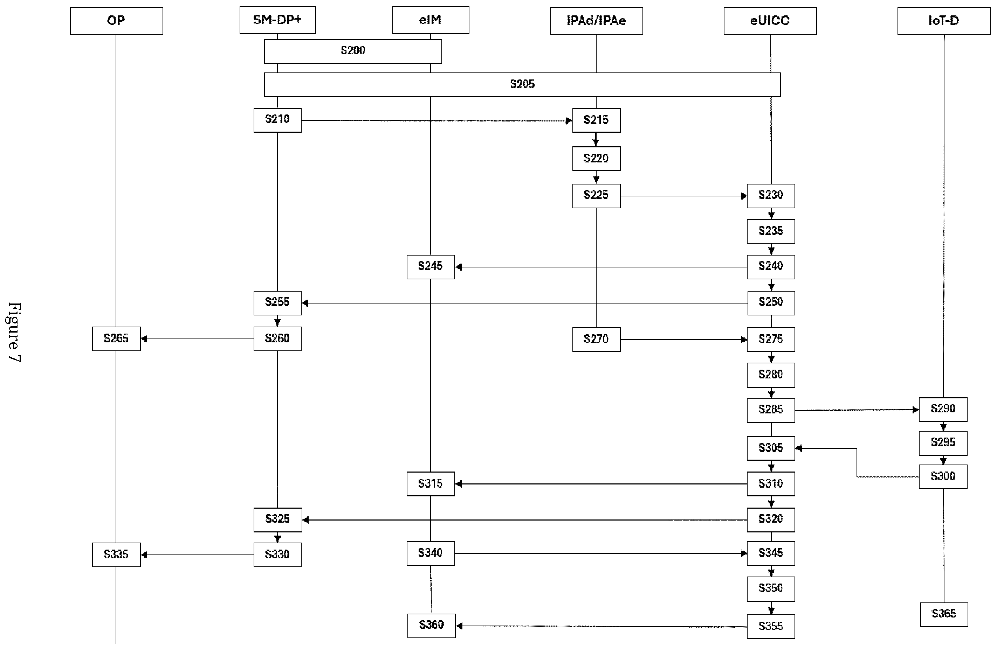

La figure 7 représente, sous forme d'ordinogramme, un troisième mode particulier de mise en œuvre d'un procédé de connexion.

Tel qu'illustré par la figure 7, le procédé de connexion comprend une première étape S200, mise en œuvre par le gestionnaire SM-DP+ de profils d'opérateurs et/ou par le gestionnaire eIM d'éléments sécurisés d'objets connectés, au cours de laquelle une connexion sécurisée est établie entre ces deux gestionnaires. En variante, la première étape S200 est mise en œuvre par le gestionnaire SM-DP+ et l'eUICC via l'assistant IPAd/IPAe, sans implication du gestionnaire eIM d'éléments sécurisés d'objets.

Le procédé de connexion comprend en outre une étape S205 au cours de laquelle une procédure d'authentification mutuelle est mise en œuvre entre le gestionnaire SM-DP+ de profil d'opérateur, le gestionnaire eIM d'éléments sécurisés d'objets connectés, l'assistant IPAd/iPAe IPAe de profil d'objet connecté, et l'élément sécurisé eUICC. Dans une variante, le gestionnaire eIM d'éléments sécurisés d'objets connectés n'est pas impliqué dans la procédure d'authentification mutuelle de l'étape S205, et seuls le gestionnaire SM-DP+ de profil d'opérateur, l'assistant IPAd/IPAe de profil d'objet connecté, et l'élément sécurisé eUICC le sont.

Le procédé de connexion comprend en outre une étape S210 au cours de laquelle un profil d'opérateur PR#2 et des métadonnées MD associées à ce profil PR#2 sont transmis, dans le cadre d'une procédure de chargement et d'installation de profil, par le gestionnaire SM-DP+, à destination d'un assistant IPAd, IPAe de profil d'objet connecté, et reçus par cet assistant lors d'une étape S215. Le profil PR#2 est un profil d'opérateur associé au réseau ID_NET#2. En outre, les métadonnées du profil PR#2 incluent un identifiant de réseau ID_NET#2 et un identifiant de point d'accès réseau APN#2 permettant de se connecter au réseau ID_NET#2. Comme évoqué précédemment, lorsque l'assistant de profil d'objet connecté est embarqué au sein de l'élément sécurisé eUICC, il est alors référencé IPAe, et lorsque cet assistant de profil d'objet connecté est embarqué au sein de l'objet connecté IoT-D, il est alors référencé IPAd.

Lors d'une étape S220, l'assistant IPAd/IPAe analyse les métadonnées MD du profil d'opérateur PR#2 et détecte les paramètres de configuration APN ID_NET#2 et APN#2. Cette détection peut se faire en cours de réception du profil PR#2 par l'assistant IPAd/IPAe, ou lorsque l'assistant IPAd/IPAe a reçu l'ensemble du profil PR#2 et que le chargement du profil PR#2 est terminé.

Lors d'une étape S225, l'assistant IPAd/IPAe transmet le profil PR#2 et les métadonnées MD à destination de l'eUICC, qui sont reçus par cette eUICC lors de l'étape S230. Dans le cas particulier où l'assistant IPA de profil d'objet connecté est embarqué au sein de l'objet connecté IoT-D (assistant IPAd), le profil PR#2 et les métadonnées sont par exemple transmis au travers de l'interface "ES10b" telle que définie par la norme SGP.31, et reçus par le module ISD-R. Cette étape S230 de réception est par exemple mise en œuvre par le module MOD_RX de l'eUICC.

À la suite de la réception du profil PR#2 et des métadonnées associées lors de l'étape S230, l'eUICC installe le profil PR#2 lors d'une étape S235.

Le procédé de connexion comprend en outre une étape S240 au cours de laquelle l'eUICC transmet, à destination du gestionnaire eIM d'éléments sécurisés d'objets connectés, une donnée "ACK_INSTPRO" représentative d'un résultat de l'installation du profil d'opérateur PR#2. Cette donnée "ACK_INSTPRO" est reçue par le gestionnaire eIM d'éléments sécurisés d'objets connectés lors d'une étape S245. Ainsi, la donnée ACK_INSTPRO indique si l'installation du profil s'est déroulée comme attendu et/ou si des erreurs ont été générées lors de cette installation. L'élément sécurisé eUICC transmet également, lors d'une étape S250, cette donnée ACK_INSTPRO à destination du gestionnaire SM-DP+. Cette donnée ACK_INSTPRO est reçue par le gestionnaire SM-DP+ lors d'une étape S255, qui la retransmet ensuite à l'opérateur OP lors d'une étape S260. La donnée ACK_INSTPRO est ensuite reçue par l'opérateur lors d'une étape S265.

Le procédé de connexion comprend en outre une étape S270 de transmission, par l'assistant IPAd/IPAe à destination de l'eUICC, d'une commande dite "deuxième commande" ou "UpdateAPNList", qui est reçue (et détectée) par l'eUICC lors d'une étape S275, par exemple par son module ISD-R. Dans le cas particulier où l'assistant IPA de profil d'objet connecté est embarqué au sein de l'objet connecté IoT-D (assistant IPAd), cette deuxième commande est, par exemple, transmise à l'eUICC au travers de l'interface "ES10b" telle que définie par la norme SGP.31, et reçue par le module ISD-R. Cette commande "UpdateAPNList" est formatée de façon à contenir au moins le couple de données (APN#2, ID_NET#2).

À la suite de la réception et de la détection S275 de la deuxième commande l'eUICC génère, lors d'une étape S280, une commande, dite "première commande" représentative de la détection de la deuxième commande "UpdateAPNList" de mise à jour de l'ensemble d'identifiant(s) de points d'accès réseau utilisables avec le couple (APN#2, ID_NET#2) lors de sa réception à l'étape 275.

Puis, lors d'une étape S285, l'eUICC transmet, à destination de l'objet connecté IoT-D, cette "première commande" qui vise à ajouter ledit identifiant à un ensemble d'identifiant(s) de points d'accès réseau utilisables par l'objet connecté. Cette première commande correspond par exemple à la commande "RUN AT COMMAND" telle que définie en section 6.4.23 de la norme ETSI TS 102 223, version V14.1.1, et publiée par l'ETSI en juillet 2018. La commande "RUN AT COMMAND" ainsi générée est formatée de sorte à pouvoir transmettre le couple (APN#2, ID_NET#2) depuis l'eUICC vers l'objet connecté et à permettre la mise à jour de l'ensemble d'identifiant(s) de points d'accès réseau de l'objet connecté IoT-D.

Cette première commande est reçue par l'objet connecté IoT-D lors d'une étape S290. Puis, lors d'une étape S295, en réponse à la réception de cette première commande, l'objet connecté IoT-D met à jour l'ensemble d'identifiant(s) de points d'accès réseau utilisables - et par exemple stocké en mémoire non volatile 4 -. Plus précisément, lors de cette étape S295, l'objet connecté IoT-D ajoute le couple (APN#2, ID_NET#2) à cet ensemble.

Puis, lors d'une étape S300, l'objet connecté IoT-D transmet, à destination de l'eUICC, une donnée "ACK_APNUPD" représentative d'un résultat de la mise-à-jour de l'ensemble d'identifiant(s), qui est reçue par cette eUICC lors d'une étape S305. Ainsi, la donnée ACK_ APNUPD indique si l'installation s'est déroulée comme attendu et/ou si des erreurs ont été générées lors de cette installation.

Le procédé de connexion comprend en outre une étape S310 au cours de laquelle l'eUICC transmet, à destination du gestionnaire eIM d'éléments sécurisés d'objets connectés, la donnée "ACK_APNUPD". Cette donnée "ACK_ APNUPD" est reçue par le gestionnaire eIM d'éléments sécurisés d'objets connectés lors d'une étape S315. L'élément sécurisé eUICC transmet également, lors d'une étape S320, cette donnée "ACK_ APNUPD" à destination du gestionnaire SM-DP+. Cette donnée "ACK_ APNUPD" est reçue par le gestionnaire SM-DP+ lors d'une étape S325, qui la retransmet ensuite à l'opérateur OP lors d'une étape S330. La donnée ACK est ensuite reçue par l'opérateur lors d'une étape S335.

Le procédé de connexion comprend également une étape S350 au cours de laquelle l'élément sécurisé eUICC active le profil d'opérateur PR#2. Cette étape S350 d'activation d'un profil est par exemple mise en œuvre par le module MOD_ACT de l'eUICC, et est initiée à la suite de la réception S345, par l'eUICC, d'une commande d'activation d'un profil d'opérateur, telle que la commande "EnableProfile". Cette commande "EnableProfile" est par exemple définie dans la norme GSMA SGP.32 et transmise par le gestionnaire eIM d'éléments sécurisés d'objets connectés à destination de l'eUICC via l'assistant IPAd/IPAe au cours d'une étape S340.

Selon une implémentation particulière, le procédé de connexion comprend en outre une transmission S355, par l'eUICC et à destination du gestionnaire eIM d'éléments sécurisés d'objets connectés, d'une confirmation ACK_ACT d'activation de ce deuxième profil PR#2. Cette confirmation ACK_ACT est reçue par ce gestionnaire eIM lors d'une étape S360.

Enfin, le procédé de connexion comprend une étape S365 au cours de laquelle l'objet connecté IoT-D se connecte au réseau ID_NET#2, en utilisant l'identifiant de point d'accès réseau APN#2. Cette étape S365 de connexion est par exemple mise en œuvre par le module MOD_CO de l'objet connecté IoT-D.

## Revendications

1. Procédé de connexion à un réseau de télécommunications d'un objet connecté (IoT-D) dans lequel est embarqué un élément sécurisé (eUICC), le procédé comprenant :
- une réception (S30, S120), par l'élément sécurisé (eUICC), d'un identifiant (APN) de point d'accès réseau préalablement émis par un gestionnaire (eIM) d'éléments sécurisés d'objets connectés ou par un gestionnaire (SM-DP+) de profils d'opérateurs, l'identifiant (APN) de point d'accès réseau étant associé à un opérateur du réseau de télécommunications ;
- une activation (S65, S165), par l'élément sécurisé (eUICC), d'un profil d'opérateur (PR#2) associé audit opérateur, le profil d'opérateur (PR#2) étant enregistré au sein de l'élément sécurisé (eUICC) ; et
- une connexion (S90, S170), par l'objet connecté (IoT-D), au réseau de télécommunications de l'opérateur en utilisant ledit identifiant de point d'accès réseau (APN).

2. Procédé de connexion selon la revendication 1, comprenant en outre, préalablement à l'activation (S65),
- une réception (S45), par l'objet connecté (IoT-D) et en provenance de l'élément sécurisé (eUICC), dudit identifiant (APN) de point d'accès réseau et d'une commande, dite "première commande", visant à ajouter ledit identifiant à un ensemble d'identifiant(s) de points d'accès réseau utilisable(s) par l'objet connecté (IoT-D) ; et
- un ajout (S50), par l'objet connecté, dudit identifiant (APN) de point d'accès réseau audit ensemble d'identifiant(s) de points d'accès réseau.

3. Procédé de connexion selon la revendication 1 ou 2, comprenant en outre, une transmission (S15) dudit identifiant de point d'accès réseau (APN), par le gestionnaire (eIM) d'éléments sécurisés d'objets connectés et à destination de l'élément sécurisé (eUICC) via un assistant (IPAd, IPAe) de profil d'objet connecté.

4. Procédé de connexion selon la revendication 3, dans lequel l'assistant (IPAd, IPAe) de profil d'objet connecté est embarqué au sein de l'élément sécurisé (eUICC) ou de l'objet connecté (IoT-D).

5. Procédé de connexion selon la revendication 3 ou 4 en combinaison avec la revendication 2, dans lequel ledit identifiant (APN) de point d'accès réseau est transmis (S15), par le gestionnaire (eIM) d'éléments sécurisés d'objets connectés et à destination de l'élément sécurisé (eUICC), avec une commande, dite "deuxième commande", interprétable par ledit élément sécurisé (eUICC) et visant à transmettre ladite "première commande" à l'objet connecté (IoT-D).

6. Procédé de connexion selon la revendication 3 ou 4 en combinaison avec la revendication 2, dans lequel ledit identifiant (APN) de point d'accès réseau est transmis (S15), par le gestionnaire (eIM) d'éléments sécurisés d'objets connectés et à destination de l'élément sécurisé (eUICC), avec une commande, dite "troisième commande", d'activation d'un profil d'opérateur de l'élément sécurisé (eUICC), ladite troisième commande comprenant un paramètre représentatif d'une requête de mise-à-jour de l'ensemble d'identifiant(s) de points d'accès réseau de l'objet connecté (IoT-D).

7. Procédé de connexion selon l'une des revendications 3 à 6, dans lequel l'identifiant (APN) de point d'accès réseau et, le cas échéant, la deuxième commande ou la troisième commande, sont transmis dans un package de données.

8. Procédé de connexion selon la revendication 1, dans lequel l'identifiant (APN) de point d'accès réseau est transmis par le gestionnaire de profils d'opérateurs (SM-DP+) dans le cadre d'un chargement d'un profil d'opérateur (PR#2) sur l'élément sécurisé (eUICC) de l'objet connecté (IoT-D), et la réception (S120) comprend en outre une réception dudit profil d'opérateur (PR#2).

9. Procédé de connexion selon la revendication 8, comprenant en outre un traitement (S125), par l'élément sécurisé (eUICC), dudit identifiant (APN) de point d'accès réseau en tant que métadonnée associée audit profil d'opérateur (PR#2).

10. Programmes d'ordinateurs (PROG_D, PROG_E) comportant des instructions pour la mise en œuvre d'un procédé de connexion selon l'une quelconque des revendications 1 à 9, lorsque lesdits programmes sont exécutés par un ordinateur.

11. Support d'enregistrement lisible par un ordinateur sur lequel sont enregistrés des programmes d'ordinateurs selon la revendication 10.

12. Objet connecté (IoT-D) dans lequel est embarqué un élément sécurisé (eUICC) et comprenant :
- un module de réception (MOD_RX), au sein de l'élément sécurisé (eUICC), d'un identifiant (APN) de point d'accès réseau préalablement émis par un gestionnaire (eIM) d'éléments sécurisés d'objets connectés ou par un gestionnaire de profils d'opérateurs (SM-DP+), l'identifiant (APN) de point d'accès réseau étant associé à un opérateur du réseau de télécommunications ;
- un module d'activation (MOD_ACT), au sein de l'élément sécurisé (eUICC), d'un profil d'opérateur (PR#1, PR#2) associé audit opérateur, le profil d'opérateur (PR#1, PR#2) étant enregistré au sein de l'élément sécurisé (eUICC) ; et,
- un module de connexion (MOD_CO) au réseau de télécommunications de l'opérateur en utilisant ledit identifiant de point d'accès réseau (APN).

13. Système de télécommunication comprenant un gestionnaire (eIM) d'éléments sécurisés d'objets connectés et un objet connecté (IoT-D) selon la revendication 12.

14. Système de télécommunication comprenant un gestionnaire de profils d'opérateurs (SM-DP+) et un objet connecté (IoT-D) selon la revendication 12.
